# EUROPÄISCHE PATENTANMELDUNG

(11) **EP 4 787 641 A1**
(43) Veröffentlichungstag der Anmeldung: **05.08.2026**
(21) Anmeldenummer: 25154715.4
(22) Anmeldetag: 29.01.2025
(51) Int. Cl.: H02B 1/38, H02B 1/28, E05D 7/10, E05D 11/06

(54) **KABELVERTEILERSCHRANK MIT EINEM GEHÄUSE UND EINER IN DEM GEHÄUSE SCHWENKBAR GELAGERTEN SCHRANKTÜR**

(71) Anmelder: Jean Müller GmbH Elektrotechnische Fabrik, 65343 Eltville am Rhein (DE)
(72) Erfinder: Aldabbag, Ammar, 55411 Bingen am Rhein (DE); Hiekisch, Alexander, 65232 Taunusstein (DE)
(74) Vertreter: Franke, Markus

(57) **Zusammenfassung**

Die Erfindung betrifft einen Kabelverteilerschrank (10), insbesondere für Niederspannung. Der Kabelverteilerschrank (10) weist ein einen Innenraum begrenzendes Gehäuse (20) und zumindest eine in dem Gehäuse (20) schwenkbar gelagerte Schranktür (30) mit einer dem Innenraum (11) zugewandten Türinnenseite und einer der Türinnenseite gegenüberliegenden Türaußenseite auf, wobei die Schranktür (30) über zumindest eine Scharnieranordnung um eine Schwenkachse schwenkbar in dem Gehäuse (20) gelagert ist. Dabei ist mit einer ersten Gehäusewand (21) des Gehäuses (20) zumindest ein Verstärkungselement (50) verbunden, wobei das Verstärkungselement (50) einen Stützabschnitt für die Schranktür (30) aufweist, wobei die Schranktür (30) zumindest eine Lagertasche für den Stützabschnitt des zumindest einen Verstärkungselements (50) aufweist, wobei bei einem Hebeln der Schranktür (30) über eine Hebelachse (A2) sich die Schranktür (30) mit der Türinnenseite an dem Stützabschnitt abstützt zur Verhinderung oder Verringerung einer Krafteinleitung in einen Scharnierstift der zumindest einen Scharnieranordnung.

## Beschreibung

Die Erfindung betrifft einen Kabelverteilerschrank, insbesondere für Niederspannung. Ein Kabelverteilerschrank weist in der Regel ein Gehäuse und zumindest eine in dem Gehäuse schwenkbar gelagerte Schranktür auf. Grundsätzlich kann ein Kabelverteilerschrank genau eine Schranktür aufweisen, somit einflügelig ausgebildet sein, oder genau zwei Schranktüren aufweisen, somit zweiflügelig ausgebildet sein. Kabelverteilerschränke werden häufig auch als Verteilerschränke oder Geräteschränke bezeichnet. Kabelverteilerschränke finden Verwendung bei der Energieversorgung.

Kabelverteilerschränke werden in aller Regel im Freien aufgestellt und sind vorzugsweise geeignet zum Einbau von Verteilerkomponenten für die öffentliche Energieversorgung sowie Gerätekomponenten, wie Verkehrsanlagen, Pumpensteuerungen usw.. Bei der Aufstellung von Kabelverteilerschränken im Freien werden diese häufig bis zu einer bestimmten Tiefe in die Erde eingegraben. Ein solcher Kabelverteilerschrank kann einen Eingrabsockel aufweisen. Kabelverteilerschränke können aber auch mit einem Bodenaufbausockel oder mit einer Wandkonsole zur Wandmontage ausgerüstet sein.

Zu- und Abgangskabel werden bei einem Kabelverteilerschrank in der Regel von unten, beispielsweise aus der Erde kommend, in das Schrankinnere eingelegt. Zu diesem Zwecke ist ein Boden des Kabelverteilerschranks in der Regel offen. Im Schrankinneren können entsprechende Verteilerkomponenten oder Steuereinheiten an definierten Punkten befestigt werden.

Aus der DE 10 2009 005 140 A1 ist ein Kabelverteilerschrank bekannt, der die Merkmale des Oberbegriffs des Anspruchs 1 aufweist. Der in der DE 10 2009 005 140 A1 offenbarte Kabelverteilerschrank weist ein einen Innenraum begrenzendes Gehäuse und eine in dem Gehäuse schwenkbar gelagerte Schranktür mit einer dem Innenraum zugewandten Türinnenseite und einer der Türinnenseite gegenüberliegenden Türaußenseite auf. Die Schranktür ist über zwei Scharnieranordnungen um eine Schwenkachse schwenkbar in dem Gehäuse gelagert ist. Die jeweilige Scharnieranordnung weist einen die Schwenkachse definierenden Scharnierstift auf. Eine Vorderkante einer Seitenwand des Gehäuses bildet einen Endanschlag für die Schranktür, wobei durch ein Zusammenwirken der Türaußenseite mit dem Endanschlag ein maximaler Öffnungswinkel der Schranktür begrenzt ist.

Bei einem Kabelverteilerschrank, wie er aus der DE 10 2009 005 140 A1 bekannt ist, besteht die Problematik, dass bei einer bis zum Endanschlag verschwenkten Schranktür eine Krafteinleitung auf die Schranktür senkrecht zu der Türfläche der Schranktür an einem von dem Endanschlag und der Schwenkachse beabstandeten Angriffspunkt zu einer Krafteinleitung in die Scharnierstifte führt, da in einem solchen Fall der Endanschlag eine Hebelachse für die Schranktür bildet. Die vorbeschriebene Situation kann beispielsweise auftreten, wenn sich eine Person, beispielsweise ein Monteur, an der bis zum Endanschlag geöffneten Schranktür abstützt oder sich an diese anlehnt. In der Regel ist der Endanschlag benachbart der Schwenkachse ausgebildet, wodurch es aufgrund der Hebelwirkung auch bei relative geringer Krafteinleitung auf die Schranktür zu einer erheblichen Krafteinwirkung auf die Komponenten der Scharnieranordnung, beispielsweise den oder die Scharnierstifte, kommen kann. Bei der vorbeschriebenen Situation kann es zu einem Bruch oder einer Beschädigung der Scharnieranordnung, insbesondere der Scharnierstifte, kommen.

Aufgabe der vorliegenden Erfindung ist es, einen Kabelverteilerschrank, der die Merkmale des Oberbegriffs des Anspruchs 1 aufweist, so weiter zu bilden, dass dieser bei einfacher Bauweise und einfacher Montage, die vorbeschriebene Problematik löst.

Gelöst wird die Aufgabe durch den Gegenstand des unabhängigen Anspruchs. Die abhängigen Ansprüche betreffen vorteilhafte Weiterbildungen.

Der erfindungsgemäße Kabelverteilerschrank weist ein einen Innenraum begrenzendes Gehäuse und zumindest eine in dem Gehäuse schwenkbar gelagerte Schranktür mit einer dem Innenraum zugewandten Türinnenseite und einer der Türinnenseite gegenüberliegenden Türaußenseite auf, wobei die Schranktür über zumindest eine Scharnieranordnung um eine Schwenkachse schwenkbar in dem Gehäuse gelagert ist, wobei die zumindest eine Scharnieranordnung einen die Schwenkachse definierenden Scharnierstift aufweist, wobei ein Teilbereich des Gehäuses einen Endanschlag für die Schranktür bildet, wobei durch ein Zusammenwirken der Türaußenseite mit dem Endanschlag ein maximaler Öffnungswinkel der Schranktür begrenzt ist, wobei der Endanschlag derart gestaltet ist, dass durch den Endanschlag eine parallel und beabstandet zu der Schwenkachse verlaufende Hebelachse für die Schranktür bei einer Krafteinleitung zu größeren als dem maximalen Öffnungswinkel gebildet ist, wobei mit einer ersten Gehäusewand des Gehäuses zumindest ein Verstärkungselement verbunden ist, wobei das Verstärkungselement einen Stützabschnitt für die Schranktür aufweist, wobei die Schranktür zumindest eine Lagertasche für den Stützabschnitt des zumindest einen Verstärkungselements aufweist, wobei der Stützabschnitt des zumindest einen Verstärkungselements in der Lagertasche aufgenommen ist, wobei die Lagertasche auf der Türinnenseite offen ist zum Einbringen des Stützabschnitts in die Lagertasche, wobei bei einem Hebeln der Schranktür über die von dem Endanschlag gebildete Hebelachse sich die Schranktür mit der Türinnenseite an dem Stützabschnitt abstützt zur Verhinderung oder Verringerung einer Krafteinleitung in den Scharnierstift der zumindest einen Scharnieranordnung.

Durch das zumindest eine Verstärkungselement wird die zumindest eine Scharnieranordnung, insbesondere der Scharnierstift und etwaige korrespondierende Gegenlager bzw. Scharnierstiftaufnahmen, beispielsweise in Form von in dem Gehäuse ausgebildeten Einstecköffnungen, bei einem Hebeln der Schranktür über den Endanschlag in Richtung zu größeren Öffnungswinkeln entlastet, wodurch verhindert wird, dass es zu einer Beschädigung der Scharnieranordnung, insbesondere des Scharnierstifts, oder des Gehäuses oder der Schranktür kommt. Dadurch, dass der Stützabschnitt in einer Lagertasche angeordnet ist, kann ein besonders guter Schutz gegen das Eindringen von Fremdkörpern und gegebenenfalls Wassertropfen gewährleistet werden. Insbesondere kann durch eine entsprechende Anpassung und Ausgestaltung der Lagertasche und des Verstärkungselements ein Schutz gemäß der Schutzart IP 44 nach DIN EN 60529:2014-09 oder höher gewährleistet werden.

Aufgrund der Gestaltung des Kabelverteilerschranks mit dem zumindest einen Verstärkungselement können die Scharnieranordnung, insbesondere der oder die Scharnierstifte, weniger massiv bzw. stabil ausgebildet werden, als dies der Fall wäre, wenn kein zusätzliches Verstärkungselement vorgesehen ist. Die weniger massive Ausgestaltung des oder der Scharnierstifte erleichtert die Herstellung und die Montage des oder der Scharnierstifte.

Zwar wäre es grundsätzlich auch denkbar, zur Stabilisierung der Schranktür gegen ein Hebeln über die Hebelachse die Anzahl der Scharnierstifte zu erhöhen. Allerdings ist eine derartige Maßnahme dahingehend als nachteilhaft anzusehen, dass bei einer Anzahl von Scharnierstiften, die zwei übersteigt, ein überdefiniertes System vorliegt und etwaige Fertigungstoleranzen dazu führen können, dass eine oder mehrere der Vielzahl der Scharnierstifte nicht in die vorgesehenen Gegenlager der Scharnieranordnung, beispielsweise in Form von Einstecköffnungen, passen oder ein Verwender einige der Scharnierstifte nicht verwendet bzw. entfernt, da die Funktonalität der schwenkbaren Lagerung der Tür auch bei Verwendung von weniger Scharnierstiften als vorgesehen gewährleistet ist, wodurch dann allerdings der zusammengebaute Kabelverteilerschrank nicht die gewünschte Stabilität der Schranktür bei einem Hebeln über die Hebelachse aufweist. Zudem bedeutet das Vorsehen von weiteren Gegenlagern in der Regel eine zusätzliche Nachbearbeitung der Schranktür, da die Gegenlager in der Regel nicht in einem Fließformprozess, wie er typischerweise zur Herstellung von Schranktüren von Kabelverteilerschränken typischerweise angewendet wird, eingebracht werden können, sondern in einem dem Fließformpressen nachgelagerten Bearbeitungsschritt, beispielsweise durch spanende Bearbeitung, insbesondere Bohren.

Da die Lagertasche auf der Türinnenseite offen ist, kann der Stützabschnitt besonders einfach in die Lagertasche eingebracht werden. Insbesondere ist es nicht notwendig und vorzugsweise auch nicht vorgesehen, dass das Verstärkungselement bzw. der Stützabschnitt beweglich in der ersten Gehäusewand gelagert ist. Dadurch kann eine besonders massive und stabile Verbindung zwischen der Gehäusewand und dem Verstärkungselement erreicht werden, was sich wiederum vorteilhaft auf das Abfangen der beim Hebeln in das zumindest eine Verstärkungselement eingeleiteten Kräfte auswirkt.

Aufgrund der Gestaltung der Lagertasche als auf der Türinnenseite offene Lagertasche ist der Stützabschnitt vorzugsweise nicht vollumfänglich in der radialen Richtung umschlossen, sodass die Lagertasche der Schranktür besonders einfach und mit geringem Aufwand mit dem Stützabschnitt in Eingriff gebracht werden kann bzw. der Stützabschnitt in die Lagertasche eingeführt werden kann. Zudem hat sich eine solche Gestaltung hinsichtlich eines kostengünstigen Herstellungsverfahrens als vorteilhaft erwiesen. Dadurch, dass die Lagertasche auf der Türinnenseite offen ist, kann ein zur Herstellung von Schranktüren üblicherweise verwendetes Fließpressverfahren auch für die Schranktür des erfindungsgemäßen Kabelverteilerschranks verwendet werden. Insbesondere kann die Herstellung der Schranktür basierend auf einem Sheet Molding Compound (SMC) als Ausgangskörper unter Verwendung eines Fließformpressens erfolgen. Es ist somit vorzugsweise kein separater Bearbeitungsschritt zur Ausformung der Lagertasche notwendig.

Es hat sich ferner gezeigt, dass durch das eine oder die mehreren Verstärkungselemente zudem eine Montage der Schranktür in dem Gehäuse, insbesondere ein Einhängen und Aushängen der Schranktür, erleichtert ist, da bei einem Zusammenführen von Lagertasche und Stützabschnitt derart, dass der Stützabschnitt in der Lagertasche aufgenommen ist, sich die Schranktür bereits zumindest annähernd in der korrekten Position bezüglich des Gehäuses befindet, wodurch das Überführen des zumindest einen Scharnierstifts in seine finale Position zum schwenkbaren Lagern der Schranktür erleichtert ist. Insofern kann das Verstärkungselement in vorteilhafter Art und Weise auch als Montagehilfe dienen.

Vorzugsweise ist der Innenraum zum Einbau von Sammelschienensystemen geeignet oder mit einem Sammelschienensystem, beispielsweise einem 100 mm Sammelschienensystem und/oder einem 185 mm Sammelschienensystem, ausgestattet.

Es wird als besonders vorteilhaft angesehen, wenn der Stützabschnitt bolzenartig ausgebildet ist.

Hinsichtlich einer besonders hohen Stabilität wird es als vorteilhaft angesehen, wenn das zumindest eine Verstärkungselement ortsfest mit der ersten Gehäusewand verbunden ist.

In einer bevorzugten Ausführungsform ist vorgesehen, dass der Stützabschnitt gegenüber einer frontseitigen Außenkante des Gehäuses hervorsteht. Dadurch wird das Einbringen bzw. Einführen des Stützabschnitts in die Lagertasche erleichtert.

In einer besonders bevorzugten Ausführungsform ist vorgesehen, dass das Gehäuse aus mehreren Gehäuseteilen zusammengesetzt ist, wobei die mehreren Gehäuseteile ein Gehäusedach, eine Gehäuserückwand, eine linke Seitenwand, eine rechte Seitenwand und ein unteres Segment aufweist, wobei die erste Gehäusewand eine der Seitenwände bildet.

In diesem Zusammenhang wird es als besonders vorteilhaft angesehen, wenn das untere Segment und/oder das Dachteil jeweils ein Gegenlager, insbesondere in Form einer Einstecköffnung, für den Scharnierstift aufweist zum radialen Lagern des Scharnierstifts in dem unteren Segment und/oder dem Dachteil, zur Bildung der Scharnieranordnung. Das jeweilige Gegenlager kann beispielsweise als Bohrung ausgebildet sein. Dabei kann die Bohrung als Durchgangsbohrung oder als Sackbohrung ausgebildet sein.

Es ist durchaus denkbar, dass das zumindest eine Verstärkungselement integraler Bestandteil der ersten Gehäusewand ist, insofern einteilig mit der ersten Gehäusewand ausgebildet ist.

Als besonders vorteilhaft wird es angesehen, wenn der Stützabschnitt und die Lagertasche derart gestaltet sind, dass ein Einbringen des Stützabschnitts in die Lagertasche senkrecht zu der Schwenkachse ermöglicht ist und ein Entfernen des Stützabschnitts aus der Lagertasche senkrecht zu der Schwenkachse ermöglicht ist.

Es hat sich gezeigt, dass bei einer solchen Gestaltung das Einhängen und Aushängen der Schranktür besonders einfach und unkompliziert möglich ist.

Allgemein wird es als vorteilhaft angesehen, wenn die Schranktür lösbar in dem Gehäuse gelagert ist, insofern ausgehängt und eingehängt werden kann.

Dabei wird es als besonders vorteilhaft angesehen, wenn das Aushängen und Einhängen werkzeuglos erfolgen kann.

In einer besonders bevorzugten Ausführungsform ist vorgesehen, dass es sich bei der ersten Gehäusewand und/oder bei der Schranktür und/oder dem zumindest einen Verstärkungselement jeweils um ein Bauteil aus Kunststoff, insbesondere aus einem Faser-Kunststoff-Verbund, handelt. Vorzugsweise handelt es sich bei dem Faser-Kunststoff-Verbund um glasfaserverstärktes Polyester. Insbesondere beinhaltet der Faser-Kunststoff-Verbund Polyesterharze, Füllstoffe, beispielsweise Kreide, und Glasfasern. Ferner kann der Faser-Kunststoff-Verbund Pigmentierungsstoffe und/oder Brandschutzmittel beinhalten.

Vorzugsweise ist das zumindest eine Verstärkungselement einteilig ausgebildet.

Vorzugsweise ist die erste Gehäusewand einteilig ausgebildet.

Als besonderes vorteilhaft wird es angesehen, wenn der Scharnierstift der jeweiligen Scharnieranordnung in der Schranktür verliersicher gelagert ist, beispielsweise in einer Lageraufnahme aufgenommen ist.

Vorzugsweise weist der Kabelverteilerschrank zumindest zwei, vorzugsweise genau zwei, entlang der Schwenkachse beabstandete Scharnieranordnungen auf.

Vorzugsweise ist ein Gegenlager für den Scharnierstift der einen Scharnieranordnung in dem Dach ausgebildet und ein Gegenlager für den Scharnierstift der anderen Scharnieranordnung in dem unteren Segment ausgebildet. Das jeweilige Gegenlager ist insbesondere als Einstecköffnung, beispielsweis in Form einer Bohrung, ausgebildet.

Es wird als besonders vorteilhaft angesehen, wenn das zumindest eine Verstärkungselement entlang der Schwenkachse zwischen den zumindest zwei Scharnieranordnungen ausgebildet ist.

Es wird als besonders vorteilhaft angesehen, wenn eine frontseitige Außenkante der ersten Gehäusewand den Endanschlag bildet. Dadurch kann auf die Montage von separaten Bauteilen zur Bildung des Endanschlags verzichtet werden. Zudem gewährleistet eine derartige Gestaltung, dass der Endanschlag eine hohe mechanische Stabilität aufweist.

Es wird als besonders vorteilhaft angesehen, wenn die Schwenkachse durch den Stützabschnitt verläuft. Dadurch können etwaige notwendige Ausklinkungen hinsichtlich ihres Ausmaßes besonders gering gehalten werden. Dies wirkt sich wiederum vorteilhaft auf einen Schutz des Innenraums gegen das Eindringen von Fremdkörpern oder Wasser aus.

Vorzugsweise ist der Stützabschnitt konzentrisch zu der Schwenkachse ausgebildet.

Es wird als besonders vorteilhaft angesehen, wenn die Lagertasche den Stützabschnitt bezogen auf die Schwenkachse teilumfänglich umschließt, vorzugsweise um nicht mehr als 180°, vorzugsweise weniger als 180°, umschließt. Als besonders vorteilhaft wird es angesehen, wenn die Lagertasche den Stützabschnitt zumindest 90° umschließt. Durch eine solche Gestaltung kann der Stützabschnitt zur Führung der Schwenkbewegung beitragen, wobei dennoch ein Einbringen des Stützabschnitts in die Lagertasche quer zu der Schwenkachse bzw. ein Entnehmen des Stützabschnitts aus der Lagertasche quer zu der Schwenkachse ermöglicht ist.

In einer besonders bevorzugten Ausgestaltung ist vorgesehen, dass ein auf die Schwenkachse bezogenes radiales Spiel des Scharnierstifts der Scharnieranordnung bei dem maximalen Öffnungswinkel der Schranktür größer ist als ein radiales Spiel des Stützabschnitts in der Lagertasche, derart, dass bei dem Hebeln der Schranktür über die von dem Endanschlag gebildete Hebelachse eine Krafteileitung in den Scharnierstift verhindert ist.

Es wird als besonders vorteilhaft angesehen, wenn der Stützabschnitt einen größeren Außendurchmesser als der zumindest eine Scharnierstift aufweist.

Es wird als besonders vorteilhaft angesehen, wenn an dem Gehäuse eine Einstecköffnung für den Scharnierstift der zumindest einen Scharnieranordnung ausgebildet ist, wobei der Scharnierstift in einer Lageraufnahme der Schranktür axial verschiebbar gelagert ist zum Überführen des Scharnierstifts zwischen einer Eingriffsstellung, in der der Scharnierstift mit der an dem Gehäuse ausgebildeten Einstecköffnung in Eingriff ist zwecks Bildung der Scharnieranordnung, und einer Losstellung, in der der Scharnierstift und die Einstecköffnung außer Eingriff sind, um ein Aushängen der Schranktür zu ermöglichen.

In diesem Zusammenhang wird es als besonders vorteilhaft angesehen, wenn das zumindest eine Scharnierstift in der Eingriffsstellung durch ein Drehen des Scharnierstifts um die Schwenkachse in eine Arretierstellung überführbar ist, wobei in der Arretierstellung ein Überführen des Scharnierstifts in die Losstellung blockiert ist. Dadurch wird ein unbeabsichtigtes Lösen des Scharnierstifts aus der Einstecköffnung verhindert.

In einer vorteilhaft Weiterbildung ist vorgesehen, dass der jeweilige Scharnierstift ein erstes Ende und ein dem ersten Ende in der axialen Richtung gegenüberliegendes zweites Ende aufweist, wobei das erste Ende mit der Einstecköffnung in Eingriff ist. An dem zweiten Ende kann der Scharnierstift einen über einen Stiftquerschnitt radial nach außen hervorstehenden Teilbereich aufweisen, der einen Handhabungsansatz bildet.

Es wird als besonders vorteilhaft angesehen, wenn die in der Schranktür ausgebildete Lageraufnahme eine konzentrisch zu der Einstecköffnung ausgebildete Durchgangsöffnung aufweist, wobei der Scharnierstift zumindest in der Eingriffsstellung die Durchgangsöffnung in der axialen Richtung durchsetzt zum radialen Lagern des Scharnierstifts. Dadurch kann auf besonders einfache Art und Weise ein radiales Lagern bzw. Sichern des Scharnierstifts in der Schranktür erzielt werden.

Es wird als besonders vorteilhaft angesehen, wenn mit dem Gehäuse zumindest zwei Verstärkungselemente verbunden sind.

In einer vorteilhaft Weiterbildung ist vorgesehen, dass der Stützabschnitt eine koaxial oder annähernd koaxial zu der Schwenkachse ausgebildete, kreiszylindrische Außenkontur aufweist und die Lagertasche eine zu der kreiszylindrischen Außenkontur komplementär ausgebildete teilkreiszylindrische Gegenkontur aufweist. Durch eine derartige Gestaltung trägt der Stützabschnitt durch Zusammenwirken mit der Lagertasche zusätzlich zu einer Führung der Schwenkbewegung beim Verschwenken der Schranktür bei. Ferner hat eine derartige Gestaltung den Vorteil, dass das Verstärkungselement beim Einhängen der Schranktür besonders gut als Positionierhilfe dient.

Insbesondere vor diesem Hintergrund wird es als vorteilhaft angesehen, wenn ein Umfangswinkel der teilkreiszylindrische Gegenkontur von 90° bis kleiner oder gleich 180° beträgt

In einer bevorzugten Ausführungsform ist vorgesehen, dass das zumindest eine Verstärkungselement einen entlang der Schwenkachse hervorstehenden ersten Stützabschnitt und einen entlang der Schwenkachse entgegengesetzt zu dem ersten Stützabschnitt hervorstehenden zweiten Stützabschnitt aufweist, wobei der erste Stützabschnitt dem zweiten Stützabschnitt entlang der Schwenkachse gegenüberliegt. Es hat sich gezeigt, dass eine derartige Gestaltung hinsichtlich einer hohen Stabilität des Verstärkungselements als vorteilhaft anzusehen ist, da eine hohe Symmetrie bei der Krafteinleitung in das Verstärkungselement erreicht wird, wodurch im Vergleich zu einer Gestaltung mit lediglich einem hervorstehenden Stützabschnitt Kippmomente im Verstärkungselement vermieden werden.

Es wird als besonders vorteilhaft angesehen, wenn sich die Stützabschnitte in entgegengesetzte Richtungen entlang der Schwenkachse von dem Verbindungsabschnitt erstrecken.

In einer besonders bevorzugten Ausführungsform ist vorgesehen, dass die Schranktür im Bereich der zumindest einen Lagertasche eine Ausklinkung aufweist, wobei das zumindest eine Verstärkungselement die Ausklinkung durchsetzt.

Durch eine Abstimmung der Form und Abmessung des zumindest einen Verstärkungselements und der Ausklinkung kann trotz der Ausklinkung ein guter Schutz des Innenraums gegen Fremdkörper gewährleistet werden. Insbesondere vor diesem Hintergrund wird es als besonders vorteilhaft angesehen, wenn die Ausklinkung und das Verstärkungselement derart gestaltet sind, dass bei in einer Schließstellung befindlicher Schranktür im Bereich der Ausklinkung ein Schutz gegen ein Eindringen von Fremdkörpern und Wasser gemäß der Schutzart IP 44 nach DIN EN 60529:2014-09 oder höher gewährleistet ist.

Es wird als besonders vorteilhaft angesehen, wenn das zumindest eine Verstärkungselement als ein einteiliges, separates Bauteil ausgebildet ist, wobei das zumindest eine Verstärkungselement einen Befestigungsabschnitt und einen den Befestigungsabschnitt starr mit dem Stützabschnitt verbindenden Verbindungsabschnitt aufweist, wobei das Verstärkungselement über den Befestigungsabschnitt mechanisch mit der ersten Gehäusewand ortsfest verbunden ist, insbesondere mit der ersten Gehäusewand verschraubt ist.

Als besonders vorteilhaft wird es in diesem Zusammenhang angesehen, wenn der Befestigungsabschnitt mit der ersten Gehäusewand verschraubt ist, insbesondere mittels einem oder mehreren separaten Schraubelementen.

Insbesondere in diesem Zusammenhang wird es als vorteilhaft angesehen, wenn die erste Gehäusewand auf einer dem Innenraum zugewandten Gehäusewandinnenseite zumindest einen hervorstehenden Schraubdom aufweist, wobei der Befestigungsabschnitt über eine in den zumindest einen Schraubdom eingeschraubte Schraube mit der ersten Gehäusewand mechanisch verbunden ist. Das Vorsehen eines Schraubdoms hat zudem den Vorteil, dass sich das zumindest eine Verstärkungselement über den Befestigungsabschnitt in mehreren Raumrichtungen an dem Schraubdom abstützen kann.

Es wird als besonders vorteilhaft angesehen, wenn der Befestigungsabschnitt und der zumindest eine Schraubdom derart gestaltet sind, dass der Befestigungsabschnitt auf den zumindest einen Schraubdom aufsteckbar ist. Durch das Aufstecken wird zum einen ein guter mechanischer Halt auch vor dem Verschrauben erreicht, wodurch die Montage erleichtert ist. Zudem ist das Aufstecken dahingehend als vorteilhaft anzusehen, dass eine besonders gute Krafteinleitung von dem Befestigungsabschnitt in den Schraubdom erfolgen kann, wenn es zu einer Krafteinleitung in den Stützabschnitt bei einem Hebeln der Schranktür über die Hebelachse kommt. Dies ist insbesondere dahingehend als vorteilhaft anzusehen, dass durch die zusätzliche Steckverbindung die zumindest eine Schraubverbindung entlastet ist.

Es wird als besonders vorteilhaft angesehen, wenn die erste Gehäusewand eine abgewinkelte Außenkante aufweist, wobei der Befestigungsabschnitt einen sich zwischen dem Schraubdom und der abgewinkelten Außenkante erstreckenden Wandungsabschnitt aufweist, wobei der Wandungsabschnitt den Schraubdom kontaktiert oder nahezu kontaktiert und wobei der Wandungsabschnitt die Außenkante kontaktiert oder nahezu kontaktiert. Durch diese Gestaltung wird eine zusätzliche mechanische Stabilisierung bei Einleiten von Kräften in den Befestigungsabschnitt erreicht. Dadurch kann die Verschraubung entlastet werden.

Es wird als besonders vorteilhaft angesehen, wenn ausgehend von einer Schließstellung der Schranktür, die einem Öffnungswinkel von 0° entspricht, der maximale Öffnungswinkel der Schranktür von 160° bis 200° beträgt.

Allgemein wird es als vorteilhaft angesehen, wenn der Kabelverteilerschrank derart gestaltet ist, dass der Kabelverteilerschrank die Schutzklasse IP 44 nach DIN EN 60529:2014-09 oder höher erfüllt.

In einer besonders bevorzugten Ausführungsform ist vorgesehen, dass eine Wandstärke der Schranktür von 3 mm bis 12 mm beträgt.

In den nachfolgenden Figuren wird die Erfindung anhand eines Ausführungsbeispiels näher erläutert, ohne auf dieses beschränkt zu sein.

Es zeigen:
- Fig. 1: ein Kabelverteilerschrank in einer Frontansicht,
- Fig. 2: der Kabelverteilerschrank gemäß Fig. 1 in einer Ansicht schräg von unten,
- Fig. 3: der Kabelverteilerschrank gemäß Fig. 1 bei vollständig geöffneter rechter Schranktür in einer Frontansicht,
- Fig. 4: der Kabelverteilerschrank gemäß Fig. 3 in einer Ansicht von schräg unten,
- Fig. 5: ein Teilbereich der Fig. 3 in einer vergrößerten Darstellung,
- Fig. 6: der Teilbereich gemäß Fig. 5 in einer Schnittansicht,
- Fig. 7: der Kabelverteilerschranks gemäß Fig. 1 bei ausgehängten Schranktüren in einer Frontansicht,
- Fig. 8: ein Teilbereich der Fig. 7 in einer vergrößerten Darstellung,
- Fig. 9: eine Seitenwand des Kabelverteilerschranks in einer Ansicht auf eine Innenseite,
- Fig. 10: ein Teilbereich der Seitenwand im Bereich eines Verstärkungselements,
- Fig. 11: der Teilbereich gemäß Fig. 10 in einer Explosionsdarstellung,
- Fig. 12: eine Schranktür des Kabelverteilerschranks in einer Ansicht auf die Innenseite,
- Fig. 13: ein Teilbereich der Fig. 12 in einer vergrößerten Darstellung,

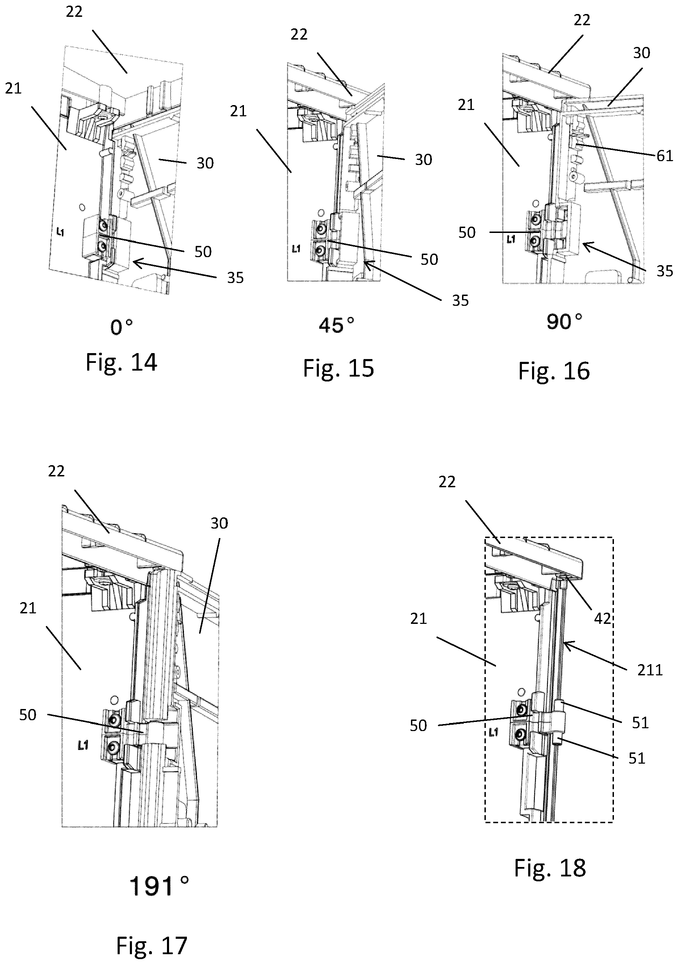

- Fig. 14: eine Innenansicht des Kabelverteilerschranks gemäß Fig. 1 im Bereich einer oberen Ecke bei geschlossener Schranktür (Öffnungswinkel 0°),
- Fig. 15: der Teilbereich gemäß Fig. 14 bei einem Öffnungswinkel der Schranktür von 45°,
- Fig. 16: der Teilbereich gemäß Fig. 15 bei einem Öffnungswinkel der Schranktür von 90°,
- Fig. 17: der Teilbereich gemäß Fig. 16 bei einem maximalen Öffnungswinkel der Schranktür von 191°,
- Fig. 18: der Teilbereich gemäß Fig. 17 bei ausgehängter Schranktür.

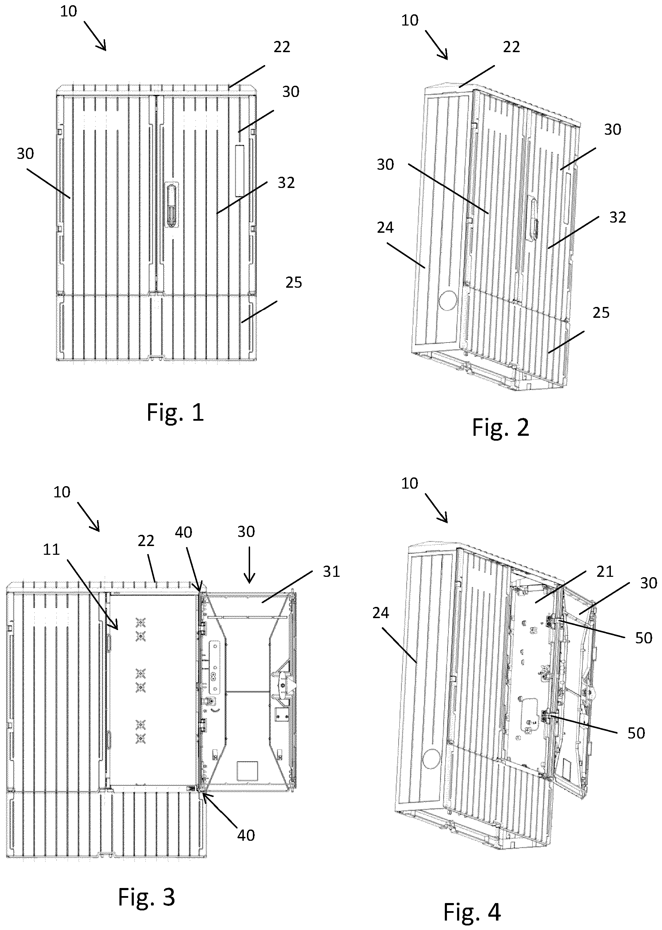

Der in den Figuren 1-4 und 7 veranschaulichte Kabelverteilerschrank 10 ist ohne Sockel, der in die Erde eingegraben wird, veranschaulicht. Nicht gezeigt sind ferner im Kabelverteilerschrank 10 einzubauende Verteilerkomponenten, Verkabelungen sowie Gerätekomponenten. Der Kabelverteilerschrank 10 weist ein einen Innenraum 11 begrenzendes Gehäuse 20 und zwei in dem Gehäuse 20 schwenkbar gelagerte Schranktüren 30 auf. Die jeweilige Schranktür 30 weist eine, im geschlossenen Zustand der Schranktür 30, dem Innenraum 11 zugewandte Türinnenseite 31 und eine der Türinnenseite 31 gegenüberliegende Türaußenseite 32 auf.

Das Gehäuse 20 ist aus mehreren Gehäuseteilen zusammengesetzt. Die mehreren Gehäuseteile umfassen ein Gehäusedach 22, eine Gehäuserückwand 23, eine linke Seitenwand 24, eine rechte Seitenwand 21 und ein unteres Segment 25. Die rechte Seitenwand 21 wird im Folgenden als erste Gehäusewand 21 bezeichnet. Ein Boden des Gehäuses 20 ist offen, um Zu- und Abgangskabel von unten, beispielsweise aus der Erde kommend, in den Innenraum 11 einzuführen. Die Gehäuseteile des Kabelverteilerschranks 10 bestehen vorliegend aus einem Faser-Kunststoff-Verbund. Entsprechendes gilt für die beiden Schranktüren 30.

Nachfolgend wird die Lagerung der rechten Schranktür 30 in dem Gehäuse 20 näher beschrieben. Die nachfolgenden Ausführungen gelten entsprechend für die linke Schranktür 30.

Die Schranktür 30 ist über eine obere Scharnieranordnung 40 und eine untere Scharnieranordnung 40 um eine vertikal verlaufende Schwenkachse A1 schwenkbar in dem Gehäuse 20 gelagert. Die jeweilige Scharnieranordnung 40 weist einen die Schwenkachse A1 definierenden Scharnierstift 41 auf. Der jeweilige Scharnierstift 41 ist in einer Lageraufnahme 60 der Schranktür 30 axial verschiebbar gelagert zum Überführen des Scharnierstifts 41 zwischen einer Eingriffsstellung, in der der Scharnierstift 41 mit einer an dem Gehäuse 20 ausgebildeten Einstecköffnung 42 der Scharnieranordnung 40 in Eingriff ist, und einer Losstellung, in der der Scharnierstift 41 und die Einstecköffnung 42 außer Eingriff sind. Dabei ist die Einstecköffnung 42 der oberen Scharnieranordnung 40 in dem Gehäusedach 22 ausgebildet. Die Einstecköffnung 42 der unteren Scharnieranordnung 40 ist in dem unteren Segment 25 ausgebildet. Befinden sich die Scharnierstifte 41 in der Eingriffsstellung ist die Schranktür 30 in dem Gehäuse 20 montiert und somit gehalten und schwenkbar um die Schwenkachse A1 in dem Gehäuse 20 gelagert. Durch Überführen der Scharnierstifte 41 in die jeweilige Losstellung kann die Schranktür 30 von dem Gehäuse 20 demontiert, nämlich ausgehängt werden.

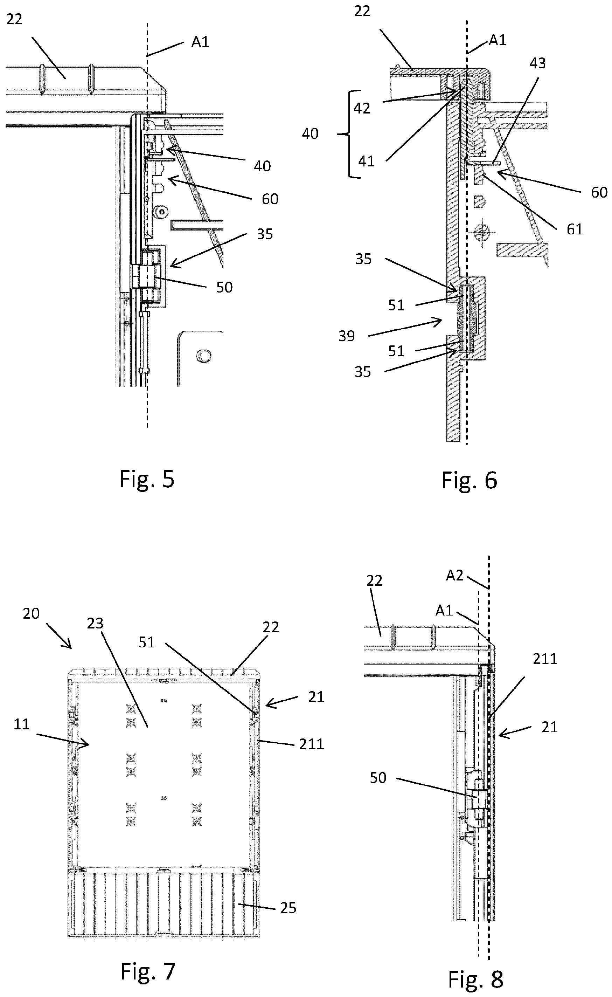

Wie insbesondere den Figuren 5 und 6 zu entnehmen ist, ist der jeweilige Scharnierstift 41 in der entsprechenden Lageraufnahme 60 der Schranktür 30 um die Schwenkachse A1 drehbar gelagert. Zur Besserung Handhabung des Scharnierstifts 41 weist dieser einen radial hervorstehenden Handhabungsansatz 43 auf. Durch ein Drehen des Scharnierstifts 41 um die Schwenkachse A1 kann der Scharnierstift 41 von einer Arretierstellung, die in den Figuren 5 und 6 gezeigt ist, in eine Verschiebestellung überführt werden. Wie insbesondere den Figuren 5 und 6 entnehmen ist, ist in der Arretierstellung ein Verschieben des Scharnierstifts 41 entlang der Schwenkachse A1 durch Zusammenwirken des Handhabungsansatzes 43 mit einem Gegenanschlag 61 der Lageraufnahme 60 blockiert.

Ein maximaler Öffnungswinkel der Schranktür 30 wird durch eine frontseitige Außenkante der ersten Gehäusewand 21 beschränkt. Insofern bildet die frontseitige Außenkante der ersten Gehäusewand 21 einen Endanschlag 211 für die Schranktür 30, wobei durch ein Zusammenwirken der Türaußenseite 32 mit dem Endanschlag 211 der maximale Öffnungswinkel der Schranktür 30 begrenzt ist. Dieser beträgt vorliegend etwa 191°. Die Figuren 3 und 4 zeigen die Schranktür 30 bei dem maximalen Öffnungswinkel.

Durch den Endanschlag 211 wird eine parallel und beanstandet zu der Schwenkachse A1 verlaufende Hebelachse A2 für die Schranktür 30 gebildet, wenn eine Krafteinleitung in die Schranktür 30 zu größeren als dem maximalen Öffnungswinkel auftritt. Bei einem weiteren Verschwenken der Schranktür 30 zu größeren als dem maximalen Öffnungswinkel kann es aufgrund der Hebelwirkung über die Hebelachse A2 zu erheblichen Krafteinwirkung auf die Scharnieranordnung 40 und insbesondere die Scharnierstifte 41 kommen. Um eine Krafteinleitung in die Scharnieranordnung 40 zu verringern oder gar zu verhindern, sind mit der ersten Gehäusewand 21 des Gehäuses 20 zwei Verstärkungselemente 50 ortsfest verbunden. Das jeweilige Verstärkungselement 50 ist als einteiliges, separates Bauteil aus FaserVerbund-Kunststoff ausgebildet und an der ersten Gehäusewand 21 mechanisch befestigt. Das jeweilige Verstärkungselement 50 weist zwei bolzenartig Stützabschnitte 51 für die Schranktür 30 auf. Für den jeweiligen Stützabschnitt 51 weist die Schranktür 30 eine Lagertasche 35 auf.

Nachfolgend wird lediglich das Zusammenwirken von einem Stützabschnitt 51 mit der entsprechenden Lagertasche 35 beschrieben wird. Die Ausführungen gelten entsprechend für den anderen Stützabschnitt 51 und die andere Lagertasche 35.

Der Stützabschnitt 51 ist in der Lagertasche 35 aufgenommen. Die Lagertasche 35 ist auf der Türinnenseite 31 offen um ein Einbringen des Stützabschnitts 51 in die Lagertasche 35 von der Türinnenseite 31 aus und senkrecht zu der Schwenkachse A1 zu ermöglichen. Bei einem Hebeln der Schranktür 30 über die von dem Endanschlag 211 gebildete Hebelachse A2 stützt sich die Schranktür 30 mit der Türinnenseite 31 an dem Stützabschnitt 31 ab, wodurch eine Krafteinleitung in den bzw. die Scharnierstifte 41 verhindert oder zumindest verringert wird.

Der Stützabschnitt 51 ist bolzenartig ausgebildet und weist eine koaxial zu der Schwenkachse A1 ausgebildete, kreiszylindrische Außenkontur auf. Die Lagertasche 35 weist eine zu der kreiszylindrischen Außenkontur komplementär ausgebildete teilkreiszylindrische Gegenkontur 37 auf. Ein Umfangswinkel der teilkreiszylindrische Gegenkontur 37 beträgt vorliegend etwa 180°.

Die Stützabschnitte 51 weisen jeweils einen größeren Außendurchmesser auf als die Scharnierstifte 41.

Das jeweilige Verstärkungselement 50 weist einen Befestigungsabschnitt 52 und einen den Befestigungsabschnitt 52 starr mit dem jeweiligen Stützabschnitt 51 verbindenden Verbindungsabschnitt 53 auf. Die beiden Stützabschnitte 51 erstrecken sich von dem Verbindungsabschnitt 53 in entgegengesetzte Richtungen entlang der Schwenkachse A1.

Die Schranktür 30 weist im Bereich der jeweiligen Lagertasche 35, nämlich zwischen den Lagertaschen, eine Ausklinkung 39 auf, wobei das jeweilige Verstärkungselement 50 mit seinem Verbindungsabschnitt 53 die Ausklinkung 39 durchsetzt. Die Ausklinkung 39 und das Verstärkungselement 50 sind derart gestaltet, dass bei in der Schließstellung befindlicher Schranktür 30, somit bei geschlossener Schranktür 30, im Bereich der Ausklinkung 39 ein Schutz gegen ein Eindringen von Fremdkörpern und Wasser gemäß der Schutzart IP 44 nach DIN EN 60529:2014-09 oder höher gewährleistet ist.

Zum mechanischen Verbinden von den Verstärkungselementen 50 mit der ersten Gehäusewand 21, weist die erste Gehäusewand 21 auf einer dem Innenraum 11 zugewandten Gehäusewandinnenseite 212 für das jeweilige Verstärkungselement 50 zwei hervorstehenden Schraubdome 26 auf. Der Befestigungsabschnitt 52 des jeweiligen Verstärkungselements 50 weist zu den Schraubdomen 26 korrespondierende Aufnahmetaschen auf, die derart gestaltet sind, dass der Befestigungsabschnitt 52 auf die Schraubdome 26 aufsteckbar ist. Der Befestigungsabschnitt 52 ist mittels zwei den Befestigungsabschnitt 52 durchsetzende und in die Schraubdome 26 eingeschraubte Schrauben mit der ersten Gehäusewand 21 mechanisch verbunden.

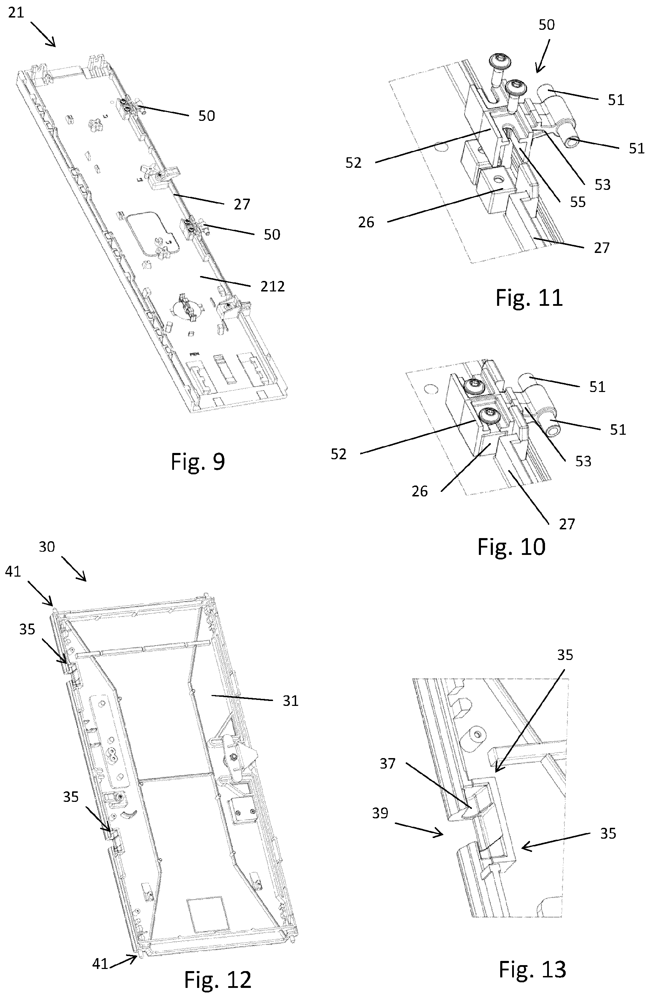

Wie insbesondere den Figur 10 und 11 zu entnehmen ist, weist die erste Gehäusewand 21 eine nach innen abgewinkelte Außenkante 27 auf. Der Befestigungsabschnitt 52 des jeweiligen Verstärkungselements 50 weist einen sich zwischen dem Schraubdomen 26 und der abgewinkelten Außenkante 27 erstreckenden Wandungsabschnitt 55 auf. Wie insbesondere der Figur 10 zu entnehmen ist, kontaktiert dieser Wandungsabschnitt 55 den jeweiligen Schraubdom 26 annähernd und die Außenkante 27 annähernd. Bei einer Krafteinleitung in das Verstärkungselement 50, beispielsweise bei einem Hebeln der Schranktür 30 über die Hebelachse A2, können über diesen Wandungsabschnitt 55 die Kräfte besonders gut in den jeweiligen Schraubdom 26 und die Außenkante 27 eingeleitet werden, wodurch die Schraubverbindungen weniger belastet werden.

### Bezugszeichenliste

- 10: Kabelverteilerschrank
- 11: Innenraum

- 20: Gehäuse
- 21: erste Gehäusewand
- 22: Gehäusedach
- 23: Gehäuserückwand
- 24: linke Seitenwand
- 25: unteres Segment
- 26: Schraubdom
- 27: Außenkante

- 30: Schranktür
- 31: Türinnenseite
- 32: Türaußenseite
- 35: Lagertasche
- 37: Gegenkontur
- 39: Ausklinkung

- 40: Scharnieranordnung
- 41: Scharnierstift
- 42: Einstecköffnung
- 43: Handhabungsansatz

- 50: Verstärkungselement
- 51: Stützabschnitt
- 52: Befestigungsabschnitt
- 53: Verbindungsabschnitt
- 55: Wandungsabschnitt
- Lageraufnahme: 60
- Gegenanschlag: 61

- 211: Endanschlag
- 212: Gehäusewandinnenseite

- A1: Schwenkachse
- A2: Hebelachse

## Patentansprüche

1. Kabelverteilerschrank (10), wobei der Kabelverteilerschrank (10) ein einen Innenraum (11) begrenzendes Gehäuse (20) und zumindest eine in dem Gehäuse (20) schwenkbar gelagerte Schranktür (30) mit einer dem Innenraum (11) zugewandten Türinnenseite (31) und einer der Türinnenseite (31) gegenüberliegenden Türaußenseite (32) aufweist, wobei die Schranktür (30) über zumindest eine Scharnieranordnung (40) um eine Schwenkachse (A1) schwenkbar in dem Gehäuse (20) gelagert ist, wobei die zumindest eine Scharnieranordnung (40) einen die Schwenkachse (A1) definierenden Scharnierstift (41) aufweist, wobei ein Teilbereich des Gehäuses (20) einen Endanschlag (211) für die Schranktür (30) bildet, wobei durch ein Zusammenwirken der Türaußenseite (32) mit dem Endanschlag (211) ein maximaler Öffnungswinkel der Schranktür (30) begrenzt ist, wobei der Endanschlag (211) derart gestaltet ist, dass durch den Endanschlag (211) eine parallel und beabstandet zu der Schwenkachse (A1) verlaufende Hebelachse (A2) für die Schranktür (30) bei einer Krafteinleitung zu größeren als dem maximalen Öffnungswinkel gebildet ist, **dadurch gekennzeichnet, dass** mit einer ersten Gehäusewand (21) des Gehäuses (20) zumindest ein Verstärkungselement (50) verbunden ist, wobei das Verstärkungselement (50) einen Stützabschnitt (51) für die Schranktür (30) aufweist, wobei die Schranktür (30) zumindest eine Lagertasche (35) für den Stützabschnitt (51) des zumindest einen Verstärkungselements (50) aufweist, wobei der Stützabschnitt (51) des zumindest einen Verstärkungselements (50) in der Lagertasche (35) aufgenommen ist, wobei die Lagertasche (35) auf der Türinnenseite (31) offen ist zum Einbringen des Stützabschnitts (51) in die Lagertasche (35), wobei bei einem Hebeln der Schranktür (30) über die von dem Endanschlag (211) gebildete Hebelachse (A2) sich die Schranktür (30) mit der Türinnenseite (31) an dem Stützabschnitt (51) abstützt zur Verhinderung oder Verringerung einer Krafteinleitung in den Scharnierstift (41) der zumindest einen Scharnieranordnung (40).

2. Kabelverteilerschrank (10) nach Anspruch 1, wobei das zumindest eine Verstärkungselement (50) ortsfest mit der ersten Gehäusewand (21) verbunden ist.

3. Kabelverteilerschrank (10) nach Anspruch 1 oder 2, wobei es sich bei der ersten Gehäusewand (21) und/oder bei der Schranktür (30) und/oder dem zumindest einen Verstärkungselement (50) jeweils um ein Bauteil aus Kunststoff, insbesondere aus einem Faser-Kunststoff-Verbund, handelt.

4. Kabelverteilerschrank (10) nach einem der Ansprüche 1 bis 3, wobei die Schwenkachse (A1) durch den Stützabschnitt (51) verläuft, vorzugsweise der Stützabschnitt (51) konzentrisch zu der Schwenkachse (51) ausgebildet ist.

5. Kabelverteilerschrank (10) nach einem der Ansprüche 1 bis 4, an dem Gehäuse (20) eine Einstecköffnung (42) für den Scharnierstift (41) der zumindest einen Scharnieranordnung (40) ausgebildet ist, wobei der Scharnierstift (41) in einer Lageraufnahme (60) der Schranktür (30) axial verschiebbar gelagert ist zum Überführen des Scharnierstifts (41) zwischen einer Eingriffsstellung, in der der Scharnierstift (41) mit der an dem Gehäuse (20) ausgebildeten Einstecköffnung (42) in Eingriff ist zwecks Bildung der Scharnieranordnung (40), und einer Losstellung, in der der Scharnierstift (41) und die Einstecköffnung (42) außer Eingriff sind, um ein Aushängen der Schranktür (30) zu ermöglichen.

6. Kabelverteilerschrank (10) nach Anspruch 5, wobei die Lageraufnahme (60) eine konzentrisch zu der Einstecköffnung (42) ausgebildete Durchgangsöffnung aufweist, wobei der Scharnierstift (41) die Durchgangsöffnung in der axialen Richtung durchsetzt.

7. Kabelverteilerschrank (10) nach einem der Ansprüche 1 bis 6, wobei der Stützabschnitt (51) eine koaxial oder annähernd koaxial zu der Schwenkachse (A1) ausgebildete, kreiszylindrische Außenkontur aufweist und die Lagertasche (35) eine zu der kreiszylindrischen Außenkontur komplementär ausgebildete teilkreiszylindrische Gegenkontur (37) aufweist.

8. Kabelverteilerschrank (10) nach einem der Ansprüche 1 bis 7, wobei das zumindest eine Verstärkungselement (50) einen entlang der Schwenkachse (A1) hervorstehenden ersten Stützabschnitt (51) und einen entlang der Schwenkachse (A1) entgegengesetzt zu dem ersten Stützabschnitt (51) hervorstehenden zweiten Stützabschnitt (51) aufweist, wobei der erste Stützabschnitt (51) dem zweiten Stützabschnitt (51) entlang der Schwenkachse (A1) gegenüberliegt.

9. Kabelverteilerschrank (10) nach einem der Ansprüche 1 bis 8, wobei die Schranktür (30) im Bereich der zumindest einen Lagertasche (35) eine Ausklinkung (39) aufweist, wobei das zumindest eine Verstärkungselement (50) die Ausklinkung (39) durchsetzt.

10. Kabelverteilerschrank (10) nach einem der Ansprüche 1 bis 9, wobei das zumindest eine Verstärkungselement (50) als ein einteiliges, separates Bauteil ausgebildet ist, wobei das zumindest eine Verstärkungselement (50) einen Befestigungsabschnitt (52) und einen den Befestigungsabschnitt (52) starr mit dem Stützabschnitt (51) verbindenden Verbindungsabschnitt (53) aufweist, wobei das Verstärkungselement (50) über den Befestigungsabschnitt (52) mechanisch mit der ersten Gehäusewand (21) ortsfest verbunden ist, insbesondere mit der ersten Gehäusewand (21) verschraubt ist.

11. Kabelverteilerschrank (10) nach Anspruch 10, wobei die erste Gehäusewand (21) auf einer dem Innenraum (11) zugewandten Gehäusewandinnenseite (212) zumindest einen hervorstehenden Schraubdom (26) aufweist, wobei der Befestigungsabschnitt (52) über eine in den zumindest einen Schraubdom (26) eingeschraubte Schraube mit der ersten Gehäusewand (21) mechanisch verbunden ist.

12. Kabelverteilerschrank (10) nach Anspruch 11, wobei der Befestigungsabschnitt (52) und der zumindest eine Schraubdom (26) derart gestaltet sind, dass der Befestigungsabschnitt (52) auf den zumindest einen Schraubdom (26) aufsteckbar ist.

13. Kabelverteilerschrank (10) nach Anspruch 11 oder 12, wobei die erste Gehäusewand (21) eine abgewinkelte Außenkante (27) aufweist, wobei der Befestigungsabschnitt (52) einen sich zwischen dem Schraubdom (26) und der abgewinkelten Außenkante (27) erstreckenden Wandungsabschnitt (55) aufweist, wobei der Wandungsabschnitt (55) den Schraubdom (26) kontaktiert oder nahezu kontaktiert und wobei der Wandungsabschnitt (55) die Außenkante (27) kontaktiert oder nahezu kontaktiert.

14. Kabelverteilerschrank (10) nach einem der Ansprüche 1 bis 13, wobei ausgehend von einer Schließstellung der Schranktür (30), die einem Öffnungswinkel von 0° entspricht, der maximale Öffnungswinkel der Schranktür von 160° bis 200° beträgt.

15. Kabelverteilerschrank (10) nach einem der Ansprüche 1 bis 14, wobei der Kabelverteilerschrank derart gestaltet ist, dass der Kabelverteilerschrank (10) die Schutzklasse IP 44 nach DIN EN 60529:2014-09 oder höher erfüllt.
